# EUROPEAN PATENT APPLICATION

(11) **EP 3 829 206 A1**
(43) Date of publication of application: **02.06.2021**
(21) Application number: 18929814.4
(22) Date of filing: 10.08.2018
(51) Int. Cl.: H04W 16/28

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan Guangdong 523860 (CN)
(72) Inventor: YOU, Xin, Dongguan, Guangdong 523860 (CN); WANG, Shukun, Dongguan, Guangdong 523860 (CN); YANG, Ning, Dongguan, Guangdong 523860 (CN)
(74) Representative: Manitz Finsterwald Patent- und Rechtsanwaltspartnerschaft mbB
(86) International application number: PCT/CN2018/100051
(87) International publication number: WO 2020/029275

(57) **Abstract**

Embodiments of the present application relate to a wireless communication method, a terminal device and a network device. The method is applied in a handover process without random access and includes: sending, by a terminal device, first information to a network side, the first information including index information corresponding to a first downlink beam of a target base station, and the first downlink beam being used for downlink communication between the target base station and the terminal device. The wireless communication method, terminal device and network device in the embodiments of the present application can establish a downlink connection between the target base station and the terminal device in a relatively short time.

## Description

### TECHNICAL FIELD

Embodiments of the present application relate to the field of communication, and more specifically, to a wireless communication method, a terminal device and a network device.

### BACKGROUND

During a handover process of the long term evolution (LTE) system, random access is mainly used to enable a terminal device to achieve uplink synchronization with a target base station. However, unlike the LTE, a multi-beam mechanism is introduced in the new radio (NR) system (or 5G system, 5G network). In addition, the time delay of random access in the handover process is relatively large.

Therefore, in the NR system, how to reduce the time delay of handover during a random handover, and how to realize synchronization between a terminal device and a network side under the multi-beam mechanism are problems to be solved urgently.

### SUMMARY

Embodiments of the present application provide to a wireless communication method, a terminal device and a network device, which can establish a downlink connection between a target base station and a terminal device in a relatively short time.

A first aspect provides a wireless communication method. The method is applied in a handover process without random access, and includes: sending, by a terminal device, first information to a network side, the first information including index information corresponding to a first downlink beam of a target base station, and the first downlink beam being used for downlink communication between the target base station and the terminal device.

A second aspect provides a wireless communication method. The method is applied in a handover process without random access, and includes: receiving, by a network side, first information sent by a terminal device, the first information including index information corresponding to a first downlink beam of a target base station, and the first downlink beam being used for downlink communication between the target base station and the terminal device.

A third aspect provides a terminal device, which is configured to execute the method in the above first aspect or each implementation thereof.

Specifically, the terminal device includes a functional module configured to execute the method in the foregoing first aspect or each implementation thereof.

A fourth aspect provides a network device, which is configured to execute the method in the above second aspect or each implementation thereof.

Specifically, the network device includes a functional module configured to execute the method in the above second aspect or each implementation thereof.

A fifth aspect provides a terminal device, including a processor and a memory. The memory is configured to store a computer program, and the processor is configured to call and run the computer program stored in the memory to execute the method in the above first aspect or each implementation thereof.

A sixth aspect provides a network device, including a processor and a memory. The memory is configured to store a computer program, and the processor is configured to call and run the computer program stored in the memory to execute the method in the above second aspect or each implementation thereof.

A seventh aspect provides a chip for implementing the method in any one of the above first to second aspects or each implementation thereof.

Specifically, the chip includes a processor, configured to call and run a computer program from a memory, so that a device installed with the chip executes the method in any one of the above first to second aspects or each implementation thereof.

An eighth aspect provides a computer-readable storage medium for storing a computer program that causes a computer to execute the method in any one of the above first to second aspects or each implementation thereof.

A ninth aspect provides a computer program product including computer program instructions that cause a computer to execute the method in any one of the above first to second aspects or each implementation thereof.

A tenth aspect provides a computer program that, when being run on a computer, causes the computer to execute the method in any one of the above first to second aspects or each implementation thereof.

In the above technical solution, a terminal device can send index information corresponding to a downlink beam to a network side. After a network device receives the index information corresponding to the downlink beam, a target base station can determine the downlink beam used for downlink communication with the terminal device. In addition, since embodiments of the present application adopts handover without random access, the target base station can establish a downlink connection between the target base station and the terminal device in a relatively short time.

### BRIEF DESCRIPTION OF THE DRAWINGS

FIG. 1 is a schematic diagram of a communication system architecture according to an embodiment of the present application.
FIG. 2 is a handover flowchart according to an embodiment of the present application.
FIG. 3 is a schematic flowchart of a wireless communication method according to an embodiment of the present application.
FIG. 4 is a schematic block diagram of a terminal device according to an embodiment of the present application.
FIG. 5 is a schematic block diagram of a network device according to an embodiment of the present application.
FIG. 6 is a schematic block diagram of a communication device according to an embodiment of the present application.
FIG. 7 is a schematic block diagram of a chip according to an embodiment of the present application.
FIG. 8 is a schematic block diagram of a communication system according to an embodiment of the present application.

### DETAILED DESCRIPTION

The technical solutions in the embodiments of the present application will be described below in conjunction with the drawings in the embodiments of the present application. Obviously, the described embodiments are a part but not all of the embodiments of the present application. Based on the embodiments in the present application, all other embodiments obtained by those of ordinary skill in the art without creative work shall fall within the protection scope of the present application.

The technical solutions of the embodiments of the present application may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD), a universal mobile telecommunication system (UMTS), a worldwide interoperability for microwave access (WiMAX) system, a 5G system and the like.

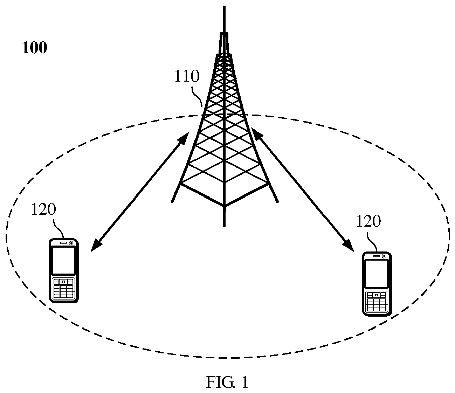

Exemplarily, FIG. 1 shows a communication system 100 applied in an embodiment of the present application. The communication system 100 may include a network device 110, and the network device 110 may be a device that communicates with a terminal device 120 (or called a communication terminal or a terminal). The network device 110 may provide communication coverage for a specific geographic area, and may communicate with terminal devices within the coverage area. Optionally, the network device 110 may be a base transceiver station (BTS) in the GSM or CDMA system, a NodeB (NB) in the WCDMA system, an evolutional Node B (eNB or eNodeB) in the LTE system, or a wireless controller in a cloud radio access network (CRAN), or the network device may be a mobile switching center, a relay station, an access point, an in-vehicle device, a wearable device, a hub, a switch, a network bridge, a router, and a network side device in the 5G network or a network side device in the future evolution public land mobile ntwork (PLMN) network.

The communication system 100 further includes at least one terminal device 120 within the coverage area of the network device 110. As used herein, the "terminal device" includes, but is not limited to, being connected via a wired line, such as a public switched telephone network (PSTN), a digital subscriber line (DSL), a digital cable, and a direct cable; and/or another data connection/network; and/or a wireless interface, for example, for a cellular network, a wireless local area network (WLAN), a digital TV network such as a DVB-H network, a satellite network, and an AM-FM broadcast transmitter; and/or another terminal device that is configured to receive/send communication signals; and/or an internet of things (IoT) device. A terminal device configured to communicate through a wireless interface may be referred to as a "wireless communication terminal", a "wireless terminal" or a "mobile terminal". Examples of the mobile terminal include, but are not limited to, a satellite or cellular phone; a personal communications system (PCS) terminal that can combine a cellular radio phone with data processing, fax, and data communication capabilities; a PDA that can include a radio phone, a pager, an internet/intranet access, a Web browser, a notepad, a calendar, and/or a global positioning system (GPS) receiver; and a conventional laptop and/or palmtop receiver or other electronic devices including a radio telephone transceiver. The terminal device may refer to an access terminal, user equipment (UE), a user unit, a user station, a mobile station, a mobile radio station, a remote station, a remote terminal, a mobile device, a user terminal, a terminal, a wireless communication device, a user agent, or a user device. The access terminal may be a cellular phone, a cordless phone, a session initiation protocol (SIP) phone, a wireless local loop (WLL) station, a personal digital assistant (PDA), a handheld device with a wireless communication function, a computing device or other processing devices connected to a wireless modem, an in-vehicle device, a wearable device, a terminal device in the 5G network, a terminal device in the future evolution PLMN or the like.

Optionally, there may be a device-to-device (D2D) communication between the terminal devices 120.

Optionally, the 5G system or 5G network may further be referred to as a new radio (NR) system or NR network.

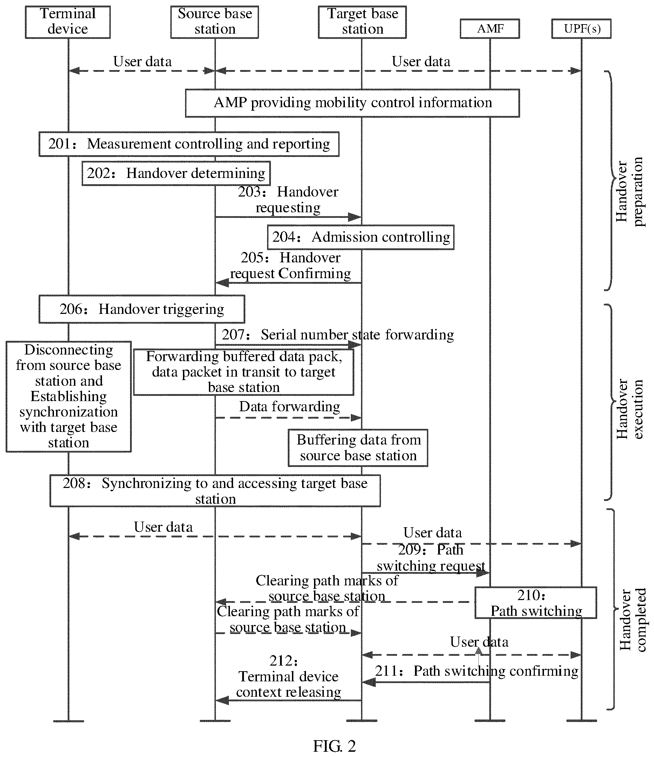

It shall be understood that the embodiments of the present application may be applied to a handover process without random access. FIG. 2 is a handover flow chart that can be applied to an embodiment of the present application. The entire handover process will be described below in conjunction with FIG. 2. It can be seen that the handover process may include three phases.

### First phase: handover preparation (201-205)

In 201, a source base station triggers a terminal device to perform neighboring cell measurement, so that the terminal device may measure a neighboring cell and report a measurement result to the source base station.

In 202, the source base station evaluates the measurement result reported by the terminal device and decides whether to trigger a handover.

In 203, if the source base station decides to trigger the handover, the source base station may send a handover request to a target base station.

In 204, after receiving the handover request sent by the source base station, the target base station may start admission according to service information carried by the source base station, and perform a radio resource configuration.

In 205, the target base station sends a handover request confirmation message to the source base station, and returns an admission result and wireless resource configuration information in the target base station to the source base station. At this point, the handover preparation phase is complete.

### Second phase: handover execution (206-208)

In 206, after the source base station receives the handover request confirmation message of the target base station, the source base station may trigger the terminal device to perform handover.

In 207, the source base station may forward buffered data, a data packet in transit, a system serial number of data and the like to the target base station. And the target base station may buffer the data received from the source base station.

In addition, the terminal device may disconnect from the source base station and establish synchronization with the target base station.

In 208, the terminal device is synchronized with the target base station. At this point, the handover execution phase is complete.

### Third phase: handover being completed (209-212)

In 209, the target base station sends a path switching request to an access and mobility management function (AMF).

In 210, after the AMF receives the path switching request of the target base station, the AMF performs path switching with a user plane function (UPF) to clear path marks of a user plane of the source base station.

In 211, after the path switching is completed, the AMF may send a path switching confirmation message to the target base station.

In 212, the target base station sends a terminal device context release message to the source base station to notify the source base station that the handover is successful, and trigger the source base station terminal device context. At this point, the handover is complete.

Embodiments of the present application will be further described in detail with reference to the handover flowchart of FIG. 2.

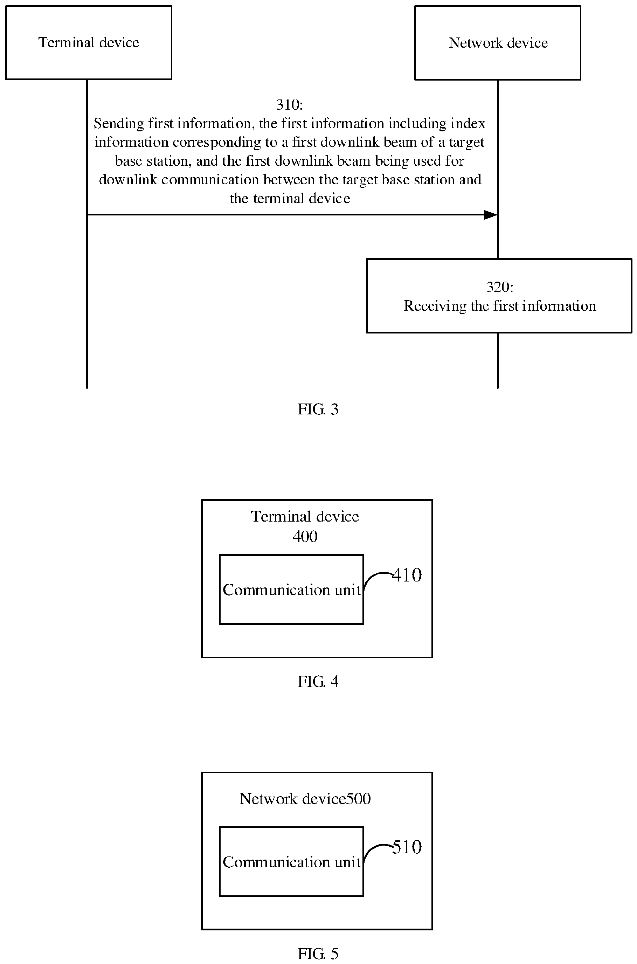

FIG. 3 is a schematic flowchart of a wireless communication method 300 according to an embodiment of the present application. The method 300 includes at least part of the following.

In 310, a terminal device sends first information to a network side, wherein the first information includes index information corresponding to a first downlink beam of a target base station, and the first downlink beam is used for downlink communication between the target base station and the terminal device.

It shall be understood that one downlink beam may correspond to one reference signal, and an index of the downlink beam may have a one-to-one correspondence to the index of the reference signal.

The one-to-one correspondence between the index of the downlink beam and the index of the reference signal may be understood as that the index corresponding to the first downlink beam is an index of a synchronization signal block (SSB) or channel state information-reference signal (CSI-RS) carried in the first downlink beam.

Optionally, the first information including the index information corresponding to the first downlink beam of the target base station may be understood as that the first information includes only the index information corresponding to the first downlink beam; or, the first information includes only the index information corresponding to at least one downlink beam of the target base station, and the at least one downlink beam includes the first downlink beam; or, the first information includes the index information corresponding to at least one downlink beam of at least one base station, and the at least one base station includes the target base station and the at least one downlink beam includes the first downlink beam.

In an embodiment of the present application, the terminal device may send the first information to the network side in the following manners.

In a first manner, the first information may be carried in a radio resource control (RRC) connection reconfiguration complete message during the handover process.

This manner may be applied to 208, the terminal device realizes uplink synchronization with the target base station, and when sending the RRC connection reconfiguration complete message to the target base station, the terminal device may carry the first information in the RRC connection reconfiguration complete message.

In a second manner, the first information may be carried in a medium access control (MAC) control element (CE) or uplink control information (UCI).

Specifically, after the terminal device sends the RRC connection reconfiguration complete message to the target base station, the terminal device may carry the first information in an uplink data packet, and send the first information to the network side through the MAC CE or UCI. For example, the MAC CE or UCI may carry the first information in an internet protocol (IP) packet interconnected between networks.

It shall be noted that, after the terminal device sends the RRC connection reconfiguration complete message to the target base station, the terminal device may carry the first information in the data packet in any step of sending the data packet to the target base station. For example, in any step after 208, if the terminal device sends the data packet to the target base station, the terminal device may carry the first information in the data packet.

As for the first and second manners, in a possible embodiment, the terminal device may select the first downlink beam from a measurement result of at least one beam of the target base station and then include an index corresponding to the first downlink beam into the first information.

Optionally, selecting, by the terminal device, the first downlink beam from the measurement result of the at least one downlink beam of the target base station may include performing, by the terminal device, channel quality measurement on the at least one downlink beam of the target base station to obtain the measurement result, and selecting the first downlink beam from the at least one downlink beam according to the measurement result.

It shall be noted that, in an embodiment of the present application, the beam measurement by the terminal device may be understood as that the terminal device measures the SSB or CSI-RS carried on the beam.

For example, performing, by the terminal device, the channel quality measurement on the at least one downlink beam of the target base station may include measuring, by the terminal device, the SSB or CSI-RS carried on each downlink beam of the target base station.

In an implementation, performing, by the terminal device, the channel quality measurement on the at least one downlink beam of the target base station may specifically include that after the source base station triggers the terminal device to perform neighboring cell measurement, the terminal device may perform the channel quality measurement on the downlink beam of the neighboring cell based on measurement configuration information sent by the source base station (for example, this process may correspond to 201). The measurement configuration information may include a list of measurement frequencies, a list of cells corresponding to each frequency, and a measurement quantity.

Optionally, the measurement quantity may include, but is not limited to, a reference signal received power (RSRP), a reference signal receiving quality (RSRQ), and a reference signal-signal to interference plus noise ratio (RS-SINR).

After the terminal device completes the downlink beam measurement of the neighboring cell, it may report the measurement result to the source base station. The measurement result includes the measurement result of at least one downlink beam of at least one base station including the target base station (for example, the process may correspond to 201).

After receiving the measurement result sent by the terminal device, the source base station determines the target base station according to the measurement result. Then, a handover request may be sent to the target base station. After the target base station sends a handover request response message to the source base station, the source base station may send an RRC connection reconfiguration message to the terminal device to notify the terminal device of the handover. After receiving the RRC connection reconfiguration message, the terminal device may determine the target base station (for example, this process may correspond to 206). Then, the terminal device may select the measurement result of the at least one downlink beam of the target base station from the measurement result of the at least one downlink beam of the at least one base station.

After the terminal device selects the measurement result of the at least one downlink beam of the target base station, as an example, the terminal device may compare the measurement result of the at least one downlink beam of the target base station with a threshold for selecting a beam for the target base station, and according to the comparison result, the first downlink beam is selected.

Optionally, the terminal device may compare the measurement result of the SSB or CSI-RS carried on at least one downlink beam of the target base station with the threshold.

Optionally, the threshold may be pre-determined or may be determined according to signaling.

Exemplarily, the threshold may be preset on the terminal device, or may be preset on the network side.

Exemplarily, the threshold may be determined by the terminal device. The terminal device sends information including the threshold to the network side, and the network side may obtain the threshold after receiving the information.

Exemplarily, the threshold may be determined by the network side.

If the threshold is preset on the network side or determined by the network side, the network side may send second information to the terminal device. The second information may be configured to indicate a list of beams of the target base station needed to be measured and/or the threshold.

After receiving the second information, the terminal device may select the beam of the target base station based on the threshold.

Optionally, the second information may be carried in the RRC connection reconfiguration message (for example, which may correspond to 206). If the second information is carried in the RRC connection reconfiguration message, after receiving the RRC connection reconfiguration message, the terminal device may select, based on the list of beams of the target base station that need to be measured, at least one downlink beam of the target base station from the at least one downlink beam of the at least one base station.

Optionally, the second information may be carried in measurement configuration information (for example, it may correspond to 201). If the second information is carried in the measurement configuration information, after receiving the measurement configuration information, the terminal device may measure the downlink beam of the target base station based on the list of beams of the target base station that need to be measured.

It shall be understood that in the embodiments of the present application, the terms "first" and "second" are only used to distinguish different objects from each other, but not to limit the scope of the embodiments of the present application.

It shall be understood that in the embodiments of the present application, the term "and/or" is merely an association relationship describing associated objects, indicating that there may be three relationships. For example, A and/or B may indicate that A exists alone, both A and B exist, and B exists alone. In addition, the character "/" herein generally indicates that associated objects before and after the same are in an "or" relationship.

Then, the terminal device may compare the threshold with the measurement result of the at least one downlink beam of the target base station, and then according to the comparison result, the terminal device may select the first downlink beam.

In the process that the terminal device selects the first downlink beam according to the comparison result, the terminal device may select the downlink beam of the at least one downlink beam of the target base station whose measurement result is greater than the threshold as the first downlink beam.

If there are a plurality of beams whose measurement results are greater than the threshold, optionally, the terminal device may randomly select one downlink beam as the first downlink beam. Alternatively, the terminal device may also use other manners to select the first downlink beam from the plurality of downlink beams whose measurement results are greater than the threshold, which is not specifically limited in the embodiment of the present application. For example, the terminal device may select, from the plurality of downlink beams whose measurement results are greater than the threshold, the downlink beam with the least traffic as the first downlink beam.

After the terminal device selects the measurement result of the at least one downlink beam of the target base station, as another example, the terminal device may select the downlink beam with the strongest signal strength as the first downlink beam according to the measurement result of the at least one downlink beam of the target base station.

Optionally, the signal strength may include, but is not limited to, a power, a voltage, or an amplitude of the signal.

Optionally, the terminal device may select the first downlink beam according to at least one of channel quality indicator (CQI), RSRP, RSRQ, and rank indication (RI) of the at least one downlink beam of the target base station.

For example, the terminal device may select, from the at least one downlink beam of the target base station, the downlink beam corresponding to the CQI with the largest value as the first downlink beam.

In another possible embodiment, after determining the target base station, the terminal device may send the measurement result of the at least one downlink beam of the target base station to the target base station. After receiving the measurement result, the target base station may select, according to the measurement result, the first downlink beam from the measurement result of the at least one downlink beam of the target base station.

Correspondingly, the terminal device may also select, according to the measurement result, the first downlink beam from the measurement result of the at least one downlink beam of the target base station.

Optionally, the target base station and the terminal device may select the first downlink beam according to the measurement result based on a pre-determined rule.

Optionally, the pre-determined rule may be pre-determined or may be determined according to signaling.

For example, the pre-determined rule may be preset on the terminal device and the target base station.

For another example, the pre-determined rule may be preset on the terminal device, and the terminal device sends information including the pre-determined rule to the target base station. For example, the information including the pre-determined rule may be carried in the RRC reconfiguration complete message, or may be carried in the MAC CE or UCI.

For another example, the pre-determined rule may be preset on the target base station, and the target base station may send information including the pre-determined rule to the terminal device before the terminal device selects the first downlink beam.

For another example, the pre-determined rule may be determined by the terminal device, and the terminal device sends the information including the pre-determined rule to the target base station.

For another example, the pre-determined rule may be determined by the target base station, and the target base station sends the information including the pre-determined rule to the terminal device.

In another possible embodiment, the terminal device may send the measurement result of at least one downlink beam of at least one base station to the target base station. After receiving the measurement result, the target base station may select at least one downlink beam of the target base station from the at least one downlink beam of the at least one base station. Then, the target base station may select the first downlink beam from the at least one downlink beam of the target base station according to the measurement result.

Correspondingly, the terminal device may also use the same method as the target base station to select the first downlink beam from the at least one downlink beam of the target base station.

It shall be noted that the manner of the target base station selecting the first downlink beam according to the measurement result may refer to the manner of the terminal device selecting the first downlink beam according to the measurement result, which is not repeated herein for the sake of brevity.

In a third manner, the first information may be carried in a measurement report of the terminal device sent to a source base station.

This manner may be applied to 201. The measurement report may include a measurement report of a neighboring cell, a base station corresponding to the neighboring cell includes the target base station, the first information may include index information corresponding to at least one downlink beam of at least one base station, the at least one based station includes the target base station, and the at least one downlink beam includes the first downlink beam.

After receiving the measurement report sent by the terminal device, the source base station may select the first downlink beam from the at least one downlink beam of the at least one base station according to the measurement report, and then the source base station may send the index information corresponding to the first downlink beam to the target base station.

Alternatively, after receiving the measurement report sent by the terminal device, the source base station may select at least one downlink beam with a measurement value greater than a threshold from the at least one downlink beam of the at least one base station according to the measurement result. The at least one downlink beam corresponds to the at least one base station, and the at least one downlink beam includes the first downlink beam. Then, the source base station may send the index information corresponding to the at least one downlink beam and the measurement result of the at least one downlink beam to the target base station. After receiving the measurement result of the at least one downlink beam, the target base station may select the first downlink beam according to the measurement result.

Alternatively, after receiving the measurement report sent by the terminal device, the source base station may select at least one downlink beam of the target base station from the at least one downlink beam of the at least one base station, and then the source base station may send the index information corresponding to the at least one downlink beam of the target base station and the measurement result of the at least one downlink beam of the target base station to the target base station. After receiving the index information corresponding to the at least one downlink beam of the target base station and the measurement result of the at least one downlink beam of the target base station, the target base station may select the first downlink beam according to the measurement result.

Alternatively, after receiving the measurement report sent by the terminal device, the source base station may send the measurement report to the target base station. After receiving the measurement report, the source base station may select the first downlink beam according to the measurement result.

Correspondingly, after determining the target base station, the terminal device may select the first downlink beam from the at least one downlink beam according to the measurement result.

Optionally, in an embodiment of the present application, the terminal device may determine the target base station after receiving the RRC connection reconfiguration message sent by the source base station. After determining the target base station, the terminal device may select the first downlink beam from the at least one downlink beam of the target base station. Then, the terminal device may use the first downlink beam to perform downlink communication with the target base station.

It shall be understood that the manner in which the target base station and the terminal device select the first downlink beam according to the measurement result may refer to the above corresponding description, which is omitted herein in order to avoid repetition.

In an embodiment of the present application, the method may further include: receiving, by the terminal device, timing adjustment (TA) and/or uplink grant of the target base station sent by the network side.

The TA may be configured to achieve uplink synchronization between the terminal device and the target base station, and the uplink grant may be configured to indicate time-frequency resources during uplink transmission performed by the terminal device.

As an example, the TA and/or uplink grant may be forwarded to the terminal device via the source base station. Specifically, the target base station may send the TA and/or uplink grant to the source base station, and after receiving the TA and/or uplink grant, the source base station may send the TA and/or uplink grant to the terminal device.

At this time, a time of transmitting the first information between the terminal device and the target base station is later than that of transmitting the TA and/or uplink grant between the terminal device and the source base station.

For example, after determining the target base station, the terminal device may send the first information to the target base station in 208, and at this time, the first information may be carried in the RRC connection reconfiguration complete message. Alternatively, the terminal device may send the first information to the target base station after 208, and at this time, the first information may be carried in the MAC CE or UCI.

As an example, the TA and/or uplink grant may be sent by the target base station to the terminal device.

At this time, the time of transmitting the first information between the terminal device and the source base station is earlier than the time of transmitting the TA and/or uplink grant between the terminal device and the target base station.

For example, before determining the target base station, the terminal device may send the first information to the source base station in 201. At this time, the first information may be carried in the measurement report sent by the terminal device to the source base station.

Optionally, the TA and/or uplink grant may be carried in the RRC connection reconfiguration message.

Alternatively, the TA and/or uplink grant may be carried on a physical downlink control channel (PDCCH), an enhanced physical downlink control channel (EPDCCH), a machine type communication physical downlink control channel (MPDCCH), a physical sidelink control channel (PSCCH), or a narrowband physical downlink control channel (NPDCCH).

After receiving the TA and/or uplink grant of the target base station, the terminal device may achieve uplink synchronization with the target base station. In addition, the terminal device may obtain uplink resources based on the uplink grant, thereby achieving uplink transmission between the terminal device and the target base station.

In 320, the network device receives the first information sent by the terminal device.

After the network device receives the first information sent by the terminal device, the target base station may determine the first downlink beam used for downlink communication with the terminal device, so that the first downlink beam may be used for downlink communication with the terminal device.

It shall be understood that in 310, the implementation in which the target base station determines the first downlink beam used for downlink transmission with the terminal device after the network device receives the first information sent by the terminal device has been described in detail, which will not be repeated herein.

It shall be noted that, if there is no conflict, the various embodiments described in the present application and/or the technical features in each embodiment may be combined with each other arbitrarily, and the technical solutions obtained after the combination shall also fall within the protection scope of the present application.

In the embodiment of the present application, the terminal device may send the index information corresponding to the downlink beam to the network side. After the network device receives the index information corresponding to the downlink beam, the target base station may determine the downlink beam used for downlink communication with the terminal device. In addition, since the embodiment of the present application adopts handover without random access, the target base station may establish a downlink connection between the target base station and the terminal device in a relatively short time.

It shall be understood that in the various embodiments of the present application, the serial number of the above-mentioned processes does not mean an execution order, and the execution order of each process shall be determined by the function and internal logic thereof, and does not limit the implementation process of the embodiments of the present application.

The wireless communication method according to the embodiment of the present application has been described in detail above. A wireless communication device according to an embodiment of the present application will be described below in conjunction with FIG. 4 to FIG. 6. The technical features described in the method embodiment are applicable to the following device embodiments.

FIG. 4 shows a schematic block diagram of a terminal device 400 according to an embodiment of the present application. As shown in FIG. 4, the terminal device 400 includes:

a communication unit 410, configured to send first information to a network side, the first information including index information corresponding to a first downlink beam of a target base station, and the first downlink beam being used for downlink communication between the target base station and the terminal device.

Optionally, in an embodiment of the present application, the first information is carried in an RRC connection reconfiguration complete message in the handover process.

Optionally, in an embodiment of the present application, the first information is carried in MAC CE or UCI.

Optionally, in an embodiment of the present application, the terminal device 400 further includes: a processing unit 120, configured to select the first downlink beam from a measurement result of at least one beam of the target base station for including an index corresponding to the first downlink beam into the first information.

Optionally, in an embodiment of the application, the first information is carried in a measurement report sent to a source base station, the measurement report includes a measurement report of a neighboring cell, a base station corresponding to the neighboring cell includes the target base station, the first information includes index information corresponding to at least one downlink beam of the target base station, and the at least one downlink beam includes the first downlink beam.

Optionally, in an embodiment of the present application, the terminal device 400 further includes:
a processing unit 420, configured to select the first downlink beam for the downlink communication with the target base station from the at least one downlink beam, after the target base station is determined.

The communication unit 410 is further configured to: perform the downlink communication with the target base station using the first downlink beam.

Optionally, in an embodiment of the present application, the index corresponding to the first downlink beam is an index of a synchronization signal block (SSB) or channel state information-reference signal (CSI-RS) carried in the first downlink beam.

Optionally, in an embodiment of the present application, the communication unit 410 is further configured to: receive timing adjustment (TA) and/or uplink grant of the target base station sent by the network side; and perform uplink communication with the target base station based on the TA and/or the uplink grant.

Optionally, in an embodiment of the present application, the TA and/or uplink grant of the target base station is forwarded to the terminal device 400 via a source base station.

Optionally, in an embodiment of the present application, a time of transmitting the first information with the network side is later than that of transmitting the TA and/or uplink grant with the network side.

Optionally, in an embodiment of the present application, the TA and/or uplink grant of the target base station is carried in an RRC connection reconfiguration message or a physical downlink control channel (PDCCH).

Optionally, in an embodiment of the present application, the communication unit 410 is further configured to: receive second information sent by the network side, the second information being configured to indicate a list of beams of the target base station needed to be measured and/or a threshold for selecting a beam of the target base station

Optionally, in an embodiment of the present application, the terminal device 400 further includes: a processing unit 420, configured to measure and/or select the beam of the target base station based on the list and/or the threshold.

It shall be understood that the terminal device 400 may correspond to the terminal device in the method 300, and may implement the corresponding operations of the terminal device in the method 300, which is not repeated herein for sake of brevity.

FIG. 5 shows a schematic block diagram of a network device 500 according to an embodiment of the present application. As shown in FIG. 5, the network device 500 includes:
a communication unit 510, configured to receive first information sent by a terminal device, the first information including index information corresponding to a first downlink beam of a target base station, and the first downlink beam being used for downlink communication between the target base station and the terminal device.

Optionally, in an embodiment of the present application, the first information is carried in an RRC connection reconfiguration complete message in the handover process.

Optionally, in an embodiment of the present application, the first information is carried in MAC CE or UCI.

Optionally, in an embodiment of the present application, the first information is carried in a measurement report received from a source base station, the measurement report includes a measurement report of a neighboring cell, a base station corresponding to the neighboring cell includes the target base station, the first information includes index information corresponding to at least one downlink beam of the target base station, and the at least one downlink beam includes the first downlink beam.

Optionally, in an embodiment of the present application, when the network device 500 is the target base station, the network device 500 further includes: a processing unit 510, configured to select the first downlink beam from the at least one downlink beam.

The communication unit 510 is further configured to: perform the downlink communication with the terminal device using the first downlink beam.

Optionally, in an embodiment of the present application, the communication unit 510 of the network device 500 is further configured to: send timing adjustment (TA) and/or uplink grant of the target base station to the terminal device; and when the network device 500 is the target base station, the communication unit 510 is further configured to: perform uplink communication with the terminal device based on the TA and/or the uplink grant.

Optionally, in an embodiment of the present application, the TA and/or uplink grant of the target base station is forwarded to the terminal device via a source base station.

Optionally, in an embodiment of the present application, a time of transmitting the first information between the terminal device and the network device 500 is later than that of transmitting the TA and/or uplink grant between the terminal device and the network device 500.

Optionally, in an embodiment of the present application, the TA and/or uplink grant of the target base station is carried in an RRC connection reconfiguration message or a physical downlink control channel (PDCCH).

Optionally, in an embodiment of the present application, when the network device 500 is a source base station, the communication unit 510 is further configured to: send second information to the terminal device, the second information being configured to indicate a list of beams of the target base station needed to be measured and/or a threshold for selecting a beam of the target base station.

It shall be understood that the network device 500 may correspond to the network device in the method 300, and may implement the corresponding operations of the network device in the method 300. For the sake of brevity, details thereof are not described herein again.

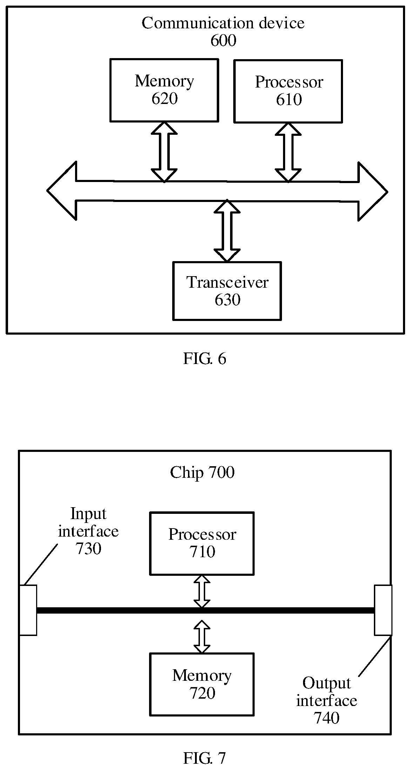

FIG. 6 is a schematic structural diagram of a communication device 600 according to an embodiment of the present application. The communication device 600 shown in FIG. 6 includes a processor 610, and the processor 610 can call and run a computer program from a memory to implement the method in the embodiment of the present application.

Optionally, as shown in FIG. 6, the communication device 600 may further include a memory 620. The processor 610 may call and run the computer program from the memory 620 to implement the method in the embodiment of the present application.

The memory 620 may be a separate device independent of the processor 610, or may be integrated in the processor 610.

Optionally, as shown in FIG. 6, the communication device 600 may further include a transceiver 630, and the processor 610 may control the transceiver 630 to communicate with other devices, specifically, to send information or data to other devices or to receive information or data sent by the other devices.

The transceiver 630 may include a transmitter and a receiver. The transceiver 630 may further include an antenna, and the number of antennas may be one or more.

Optionally, the communication device 600 may specifically be the network device of the embodiment of the present application, and the communication device 600 may implement the corresponding process implemented by the network device in each method of the embodiment of the present application, which will not be repeated here for the sake of brevity.

Optionally, the communication device 600 may specifically be the terminal device of the embodiment of the present application, and the communication device 600 may implement the corresponding process implemented by the terminal device in each method of the embodiment of the present application, which will not be repeated here for the sake of brevity.

FIG. 7 is a schematic structural diagram of a chip according to an embodiment of the present application. The chip 700 shown in FIG. 7 includes a processor 710, and the processor 710 can call and run a computer program from a memory to implement the method in the embodiment of the present application.

Optionally, as shown in FIG. 7, the chip 700 may further include a memory 720. The processor 710 may call and run the computer program from the memory 720 to implement the method in the embodiment of the present application.

The memory 720 may be a separate device independent of the processor 710, or may be integrated in the processor 710.

Optionally, the chip 700 may further include an input interface 730. The processor 710 can control the input interface 730 to communicate with other devices or chips, specifically, to obtain information or data sent by other devices or chips.

Optionally, the chip 700 may further include an output interface 740. The processor 710 can control the output interface 740 to communicate with other devices or chips, specifically, to output information or data to other devices or chips.

Optionally, the chip can be applied to the terminal device in the embodiment of the present application, and the chip can implement the corresponding process implemented by the terminal device in each method of the embodiment of the present application, which will not be repeated here for the sake of brevity.

Optionally, the chip can be applied to the network device in the embodiment of the present application, and the chip can implement the corresponding process implemented by the network device in each method of the embodiment of the present application, which will not be repeated here for the sake of brevity.

It shall be understood that the chip mentioned in the embodiment of the present application may also be referred to as system-on-chip or the like.

It shall be understood that the processor in an embodiment of the present application may be an integrated circuit chip with signal processing capability. In the implementation process, the steps of the foregoing method embodiments may be completed by integrated logic circuits in the form of hardware in the processor or instructions in the form of software. The above-mentioned processor may be a general-purpose processor, a digital signal processor (DSP), an application specific integrated circuit (ASIC), a field programmable gate array (FPGA) or other programmable logic devices, a discrete gate or transistor logic device, and a discrete hardware component. The methods, steps, and logical block diagrams disclosed in the embodiments of the present application may be implemented or executed. The general-purpose processor may be a microprocessor or any conventional processor. The steps of the method disclosed in the embodiments of the present application may be directly embodied as being executed and completed by a hardware decoding processor or by a combination of hardware and software modules in the decoding processor. The software module can be located in a mature storage medium in the field such as a random memory, a flash memory, a read-only memory, a programmable read-only memory, electrically erasable programmable memory, and a register. The storage medium is located in the memory, and the processor reads the information in the memory and completes the steps of the above method in combination with the hardware thereof.

It can be understood that the memory in an embodiment of the present application may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. By way of example but not limitation, there are a lot of available RAMs, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It shall be noted that the memory in the system and method described herein is intended to include, but is not limited to, these and any other suitable types of memories.

It shall be understood that the foregoing memory is exemplary but not restrictive. For example, the memory in an embodiment of the present application may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM) and the like. That is, the memory in the embodiment of the present application is intended to include, but is not limited to, these and any other suitable types of memories.

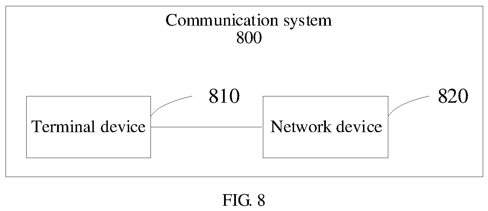

FIG. 8 is a schematic block diagram of a communication system 800 according to an embodiment of the present application. As shown in FIG. 8, the communication system 800 includes a terminal device 810 and a network device 820.

The terminal device 810 may be configured to implement a corresponding function implemented by a terminal device in the above method, and the network device 820 may be configured to implement a corresponding function implemented by a network device in the above method, which will not be repeated here for the sake of brevity.

An embodiment of the present application also provides a computer-readable storage medium for storing computer programs.

Optionally, the computer-readable storage medium may be applied to the terminal device in the embodiment of the present application, and the computer program causes a computer to execute the corresponding process implemented by the network device in each method of the embodiment of the present application, which will not be repeated here for the sake of brevity.

Optionally, the computer-readable storage medium may be applied to the network device in the embodiment of the present application, and the computer program causes a computer to execute the corresponding process implemented by the network device in each method of the embodiment of the present application, which will not be repeated here for the sake of brevity.

An embodiment of the present application also provides a computer program product including computer program instructions.

Optionally, the computer program product may be applied to the terminal device in the embodiment of the present application, and the computer program instructions cause a computer to execute the corresponding process implemented by the terminal device in each method of the embodiment of the present application, which will not be repeated here for the sake of brevity.

Optionally, the computer program product may be applied to the network device in the embodiment of the present application, and the computer program instructions cause a computer to execute the corresponding process implemented by the network device in each method of the embodiment of the present application, which will not be repeated here for the sake of brevity.

An embodiment of the present application also provides a computer program.

Optionally, the computer program may be applied to the terminal device in the embodiment of the present application, and the computer program, when being run on a computer, causes the computer to execute the corresponding process implemented by the terminal device in each method of the embodiment of the present application, which will not be repeated here for the sake of brevity.

Optionally, the computer program may be applied to the network device in the embodiment of the present application, and the computer program, when being run on a computer, causes the computer to execute the corresponding process implemented by the network device in each method of the embodiment of the present application, which will not be repeated here for the sake of brevity.

Those skilled in the art may realize that the unit and algorithm step of the examples described in combination with the embodiments disclosed herein can be implemented by electronic hardware, or a combination of computer software and electronic hardware. Whether these functions are executed by hardware or software depends on the specific application and design constraints of the technical solution. Professionals and technicians can use different methods for each specific application to implement the described functions, but such implementation shall not be considered as going beyond the scope of the present application.

Those skilled in the art can clearly understand that, for convenience and concise description, the specific working process of the above-described system, device, and unit can refer to the corresponding process in the foregoing method embodiment, which will not be repeated herein.

In several embodiments provided by present application, it shall be understood that the disclosed system, device, and method may be implemented in other ways. For example, the device embodiment described above is only illustrative. For example, the division of unit is only a logical function division, and there may be other division methods in actual implementation, for example, a plurality of units or components may be combined or may be integrated into another system, or some features may be ignored or not implemented. In addition, the displayed or discussed mutual coupling or direct coupling or communication connection may be indirect coupling or communication connection through some interfaces, devices or units, and may be in electrical, mechanical or other forms.

The units described as separate components may be or may not be physically separated, and the components displayed as units may be or may not be physical units, that is, they may be located in one place, or they may be distributed on a plurality of network units. Some or all of the units may be selected according to actual needs to achieve the objectives of the solutions of the embodiments.

In addition, the functional units in each embodiment of the present application may be integrated into one processing unit, or each unit may exist alone physically, or two or more units may be integrated into one unit.

If the function is implemented in the form of a software functional unit and sold or used as an independent product, it can be stored in a computer readable storage medium. Based on this understanding, the technical solution of the present application essentially or a part that contributes to the prior art or a part of the technical solution can be embodied in the form of a software product, and the computer software product is stored in a storage medium, and includes several instructions to cause a computer device (which may be a personal computer, a server, a network device or the like) to execute all or part of the steps of the methods described in the various embodiments of the present application. The above storage media includes a U disk, a mobile hard disk, a read-only memory (ROM), a random access memory (RAM), a magnetic disk, an optical disk and other media that can store program codes.

The above are only specific implementations of the present application, but the protection scope of the present application is not limited thereto. Any person skilled in the art can easily conceive of changes or substitutions within the technical scope disclosed in the present application, which shall fall within the protection scope of the present application. Therefore, the protection scope of the present application shall be subject to the protection scope of the claims.

## Claims

1. A wireless communication method, wherein the method is applied in a handover process without random access, and comprises:
sending, by a terminal device, first information to a network side, the first information comprising index information corresponding to a first downlink beam of a target base station, and the first downlink beam being used for downlink communication between the target base station and the terminal device.

2. The method according to claim 1, wherein the first information is carried in a radio resource control (RRC) connection reconfiguration complete message in the handover process.

3. The method according to claim 1, wherein the first information is carried in a medium access control (MAC) control element (CE) or uplink control information (UCI).

4. The method according to any one of claims 1 to 3, wherein the method further comprises:
selecting, by the terminal device, the first downlink beam from a measurement result of at least one beam of the target base station for including an index corresponding to the first downlink beam into the first information.

5. The method according to claim 1, wherein the first information is carried in a measurement report sent to a source base station, the measurement report comprises a measurement report of a neighboring cell, a base station corresponding to the neighboring cell comprises the target base station, the first information comprises index information corresponding to at least one downlink beam of the target base station, and the at least one downlink beam comprises the first downlink beam.

6. The method according to claim 5, wherein the method further comprises:
selecting, by the terminal device, the first downlink beam for the downlink communication with the target base station from the at least one downlink beam, after the target base station is determined; and
performing, by the terminal device, the downlink communication with the target base station using the first downlink beam.

7. The method according to any one of claims 1 to 6, wherein the index corresponding to the first downlink beam is an index of a synchronization signal block (SSB) or channel state information-reference signal (CSI-RS) carried in the first downlink beam.

8. The method according to any one of claims 1 to 7, wherein the method further comprises:
receiving, by the terminal device, timing adjustment (TA) and/or uplink grant of the target base station sent by the network side; and
performing, by the terminal device, uplink communication with the target base station based on the TA and/or the uplink grant.

9. The method according to claim 8, wherein the TA and/or uplink grant of the target base station is forwarded to the terminal device via a source base station.

10. The method according to claim 8 or 9, wherein a time of transmitting the first information between the terminal device and the network side is later than that of transmitting the TA and/or uplink grant between the terminal device and the network side.

11. The method according to any one of claims 8 to 10, wherein the TA and/or uplink grant of the target base station is carried in an RRC connection reconfiguration message or a physical downlink control channel (PDCCH).

12. The method according to any one of claims 1 to 11, wherein the method further comprises:
receiving, by the terminal device, second information sent by the network side, the second information being configured to indicate a list of beams of the target base station needed to be measured and/or a threshold for selecting a beam of the target base station; and
measuring and/or selecting, by the terminal device, the beam of the target base station based on the list and/or the threshold.

13. A wireless communication method, wherein the method is applied in a handover process without random access, and comprises:
receiving, by a network device, first information sent by a terminal device, the first information comprising index information corresponding to a first downlink beam of a target base station, and the first downlink beam being used for downlink communication between the target base station and the terminal device.

14. The method according to claim 13, wherein the first information is carried in a radio resource control (RRC) connection reconfiguration complete message in the handover process.

15. The method according to claim 13, wherein the first information is carried in a medium access control (MAC) control element (CE) or uplink control information (UCI).

16. The method according to claim 13, wherein the first information is carried in a measurement report received from a source base station, the measurement report comprises a measurement report of a neighboring cell, a base station corresponding to the neighboring cell comprises the target base station, the first information comprises index information corresponding to at least one downlink beam of the target base station, and the at least one downlink beam comprises the first downlink beam.

17. The method according to claim 16, wherein the method further comprises:
selecting, by the target base station, the first downlink beam from the at least one downlink beam, when the network device is the target base station; and
performing, by the target base station, the downlink communication with the terminal device using the first downlink beam.

18. The method according to any one of claims 13 to 17, wherein the index corresponding to the first downlink beam is an index of a synchronization signal block (SSB) or channel state information-reference signal (CSI-RS) carried in the first downlink beam.

19. The method according to any one of claims 13 to 18, wherein the method further comprises:
sending, by the network device, timing adjustment (TA) and/or uplink grant of the target base station to the terminal device;
performing, by the target base station, uplink communication with the terminal device based on the TA and/or the uplink grant, when the network device is the target base station.

20. The method according to claim 19, wherein the TA and/or uplink grant of the target base station is forwarded to the terminal device via a source base station.

21. The method according to claim 19 or 20, wherein a time of transmitting the first information between the terminal device and the network device is later than that of transmitting the TA and/or uplink grant between the terminal device and the network device.

22. The method according to any one of claims 19 to 21, wherein the TA and/or uplink grant of the target base station is carried in an RRC connection reconfiguration message or a physical downlink control channel (PDCCH).

23. The method according to any one of claims 13 to 22, wherein the method further comprises:
sending, by the source base station, second information to the terminal device when the network device is the source base station, the second information being configured to indicate a list of beams of the target base station needed to be measured and/or a threshold for selecting a beam of the target base station.

24. A terminal device, wherein the terminal device is applied in a handover process without random access, and comprises:
a communication unit, configured to send first information to a network side, the first information comprising index information corresponding to a first downlink beam of a target base station, and the first downlink beam being used for downlink communication between the target base station and the terminal device.

25. The terminal device according to claim 24, wherein the first information is carried in a radio resource control (RRC) connection reconfiguration complete message in the handover process.

26. The terminal device according to claim 24, wherein the first information is carried in a medium access control (MAC) control element (CE) or uplink control information (UCI).

27. The terminal device according to any one of claims 24 to 26, wherein the terminal device further comprises:
a processing unit, configured to select the first downlink beam from a measurement result of at least one beam of the target base station for including an index corresponding to the first downlink beam into the first information.

28. The terminal device according to claim 24, wherein the first information is carried in a measurement report sent to a source base station, the measurement report comprises a measurement report of a neighboring cell, a base station corresponding to the neighboring cell comprises the target base station, the first information comprises index information corresponding to at least one downlink beam of the target base station, and the at least one downlink beam comprises the first downlink beam.

29. The terminal device according to claim 28, wherein the terminal device further comprises:
a processing unit, configured to select the first downlink beam for the downlink communication with the target base station from the at least one downlink beam, after the target base station is determined; and
the communication unit is further configured to:
perform the downlink communication with the target base station using the first downlink beam.

30. The terminal device according to any one of claims 24 to 29, wherein the index corresponding to the first downlink beam is an index of a synchronization signal block (SSB) or channel state information-reference signal (CSI-RS) carried in the first downlink beam.

31. The terminal device according to any one of claims 24 to 30, wherein the communication unit is further configured to:
receive timing adjustment (TA) and/or uplink grant of the target base station sent by the network side; and
perform uplink communication with the target base station based on the TA and/or the uplink grant.

32. The terminal device according to claim 31, wherein the TA and/or uplink grant of the target base station is forwarded to the terminal device via a source base station.

33. The terminal device according to claim 31 or 32, wherein a time of transmitting the first information with the network side is later than that of transmitting the TA and/or uplink grant with the network side.

34. The terminal device according to any one of claims 31 to 33, wherein the TA and/or uplink grant of the target base station is carried in an RRC connection reconfiguration message or a physical downlink control channel (PDCCH).

35. The terminal device according to any one of claims 24 to 34, wherein the communication unit is further configured to:
receive second information sent by the network side, the second information being configured to indicate a list of beams of the target base station needed to be measured and/or a threshold for selecting a beam of the target base station; and
the terminal device further comprises:
a processing unit, configured to measure and/or select the beam of the target base station based on the list and/or the threshold.

36. A network device, wherein the network device is applied in a handover process without random access, and comprises:
a communication unit, configured to receive first information sent by a terminal device, the first information comprising index information corresponding to a first downlink beam of a target base station, and the first downlink beam being used for downlink communication between the target base station and the terminal device.

37. The network device according to claim 36, wherein the first information is carried in a radio resource control (RRC) connection reconfiguration complete message in the handover process.

38. The network device according to claim 36, wherein the first information is carried in a medium access control (MAC) control element (CE) or uplink control information (UCI).

39. The network device according to claim 36, wherein the first information is carried in a measurement report received from a source base station, the measurement report comprises a measurement report of a neighboring cell, a base station corresponding to the neighboring cell comprises the target base station, the first information comprises index information corresponding to at least one downlink beam of the target base station, and the at least one downlink beam comprises the first downlink beam.

40. The network device according to claim 39, wherein when the network device is the target base station, the network device further comprises:
a processing unit, configured to select the first downlink beam from the at least one downlink beam; and
the communication unit is further configured to:
perform the downlink communication with the terminal device using the first downlink beam.

41. The network device according to any one of claims 36 to 40, wherein the index corresponding to the first downlink beam is an index of a synchronization signal block (SSB) or channel state information-reference signal (CSI-RS) carried in the first downlink beam.

42. The network device according to any one of claims 36 to 41, wherein the communication unit is further configured to:
send timing adjustment (TA) and/or uplink grant of the target base station to the terminal device; and
when the network device is the target base station, the communication unit is further configured to:
perform uplink communication with the terminal device based on the TA and/or the uplink grant.

43. The network device according to claim 42, wherein the TA and/or uplink grant of the target base station is forwarded to the terminal device via a source base station.

44. The network device according to claim 42 or 43, wherein a time of transmitting the first information between the terminal device and the network device is later than that of transmitting the TA and/or uplink grant between the terminal device and the network device.

45. The network device according to any one of claims 42 to 44, wherein the TA and/or uplink grant of the target base station is carried in an RRC connection reconfiguration message or a physical downlink control channel (PDCCH).

46. The network device according to any one of claims 36 to 45, wherein when the network device is a source base station, the communication unit is further configured to:
send second information to the terminal device, the second information being configured to indicate a list of beams of the target base station needed to be measured and/or a threshold for selecting a beam of the target base station.

47. A terminal device, wherein the terminal device comprises a processor and a memory, the memory is configured to store a computer program, and the processor is configured to call and run the computer program stored in the memory to execute the method according to any one of claims 1 to 12.

48. A network device, wherein the network device comprises a processor and a memory, the memory is configured to store a computer program, and the processor is configured to call and run the computer program stored in the memory to execute the method according to any one of claims 13 to 23.

49. A chip, wherein the chip comprises a processor, configured to call and run a computer program from a memory, so that a device installed with the chip executes the method according to any one of claims 1 to 12.

50. A chip, wherein the chip comprises a processor, configured to call and run a computer program from a memory, so that a device installed with the chip executes the method according to any one of claims 13 to 23.

51. A computer-readable storage medium, wherein the computer-readable storage medium is configured to store a computer program that enables a computer to execute the method according to any one of claims 1 to 12.

52. A computer-readable storage medium, wherein the computer-readable storage medium is configured to store a computer program that causes a computer to execute the method according to any one of claims 13 to 23.

53. A computer program product, wherein the computer program product comprises computer program instructions that cause a computer to execute the method according to any one of claims 1 to 12.

54. A computer program product, wherein the computer program product comprises computer program instructions that cause a computer to execute the method according to any one of claims 13 to 23.

55. A computer program, wherein the computer program causes a computer to execute the method according to any one of claims 1 to 12.

56. A computer program, wherein the computer program causes a computer to execute the method according to any one of claims 13 to 23.
